# DEMANDE DE BREVET EUROPEEN

(11) **EP 1 531 420 A1**
(43) Date de publication de la demande: **18.05.2005**
(21) Numéro de dépôt: 04292665.9
(22) Date de dépôt: 10.11.2004
(51) Int. Cl.: G06K 17/00

(54) **Elément d'adaptation pour supports électroniques programmables**

(30) Priorité: 17.11.2003 FR 0313425
(71) Demandeur: Datacard S.A.S., 45404 Fleury Les Aubrais Cedex (FR)
(72) Inventeur: Mongin, Hervé, 45470 Trainou (FR); Beulet, Frédéric, 45130 Meung Sur Loire (FR); Berthe, Benoit, 45380 La Chapelle St Mesmin (FR)
(74) Mandataire: Debay, Yves

(57) **Abrégé**

La présente invention concerne un élément d'adaptation (1), pour au moins un support électronique programmable (2) à personnaliser, de dimensions surfaciques supérieures à celles de tous les supports électroniques programmables à personnaliser et correspondant aux dimensions acceptées par la machine de personnalisation, l'élément d'adaptation (1) étant sans élément de communication à contact ou sans contact et amovible de la machine de personnalisation et étant caractérisé en ce qu'il est muni d'un logement (101) de forme et de dimensions adaptées pour accueillir et maintenir au moins un support électronique programmable (2), de façon à ce que des moyens de communication (203-204) à contact ou sans contact du support électronique programmable (2) se trouvent respectivement en vis-à-vis ou à proximité des moyens de communication respectivement à contact ou sans contact de la machine de personnalisation (3).

## Description

La présente invention concerne un élément d'adaptation pour supports électroniques programmables de types et de formes variés, tels que, par exemple, tout objet à personnaliser possédant une plage de contact de type carte à puce ou une antenne et un circuit permettant la communication, comme des clés sans contact, etc..., contenant chacun de la mémoire programmable et un séquenceur logique ou un microprocesseur, et l'utilisation de l'élément d'adaptation dans une machine de personnalisation universelle de supports électroniques programmables.

Les équipements de personnalisation connus dans l'art antérieur sont adaptés à la personnalisation d'une seule forme ou d'un seul type de support électronique programmable, ce qui entraîne un investissement important pour les fabricants de cartes de différents types qui doivent changer leurs équipements chaque fois que la forme ou le type du support est modifié.

La présente invention a pour but de pallier certains inconvénients de l'art antérieur en proposant un moyen d'utiliser un dispositif unique pour personnaliser tout type de supports électroniques programmables, ce qui permet de réduire les coûts d'investissement et donc le prix de vente des supports électroniques programmables.

Ce but est atteint par un élément d'adaptation, pour au moins un support électronique programmable à personnaliser, de dimensions surfaciques supérieures à celles de tous les supports électroniques programmables à personnaliser et correspondant aux dimensions acceptées par la machine de personnalisation, l'élément d'adaptation étant sans élément de communication à contact ou sans contact et amovible de la machine de personnalisation et étant caractérisé en ce qu'il est muni d'un logement de forme et de dimensions adaptées pour accueillir et maintenir au moins un support électronique programmable, de façon à ce que des moyens de communication à contact ou sans contact du support électronique programmable se trouvent respectivement en vis-à-vis ou à proximité des moyens de communication, respectivement à contact ou sans contact, de la machine de personnalisation.

Selon une autre particularité, une pluralité d'éléments d'adaptation identiques selon l'invention est utilisée dans une machine de personnalisation universelle de supports électroniques programmables, les éléments d'adaptation étant amovibles de la machine de personnalisation qui comprend au moins :
- un système de dépilage des éléments d'adaptation depuis un magasin d'entrée et un système d'empilage des éléments d'adaptation dans un magasin de sortie, le magasin d'entrée et le magasin de sortie étant distincts ou non,
- un système d'insertion des supports électroniques programmables dans les éléments d'adaptation en début de la machine de personnalisation, et un système de désinsertion des supports électroniques programmables des éléments d'adaptation en fin de la machine de personnalisation,
- un système d'entraînement des éléments d'adaptation, équipés de supports électroniques programmables, pour les faire transiter dans la machine de personnalisation, et
- un dispositif de personnalisation, comprenant un système de communication entre une base de données fournissant les informations de personnalisation et les supports électroniques programmables par l'intermédiaire d'une liaison à contact ou sans contact entre le dispositif de personnalisation de la machine de personnalisation et le moyen de communication du support électronique programmable, pour permettre de réaliser la personnalisation des supports électroniques programmables par programmation des informations de personnalisation.

Selon une autre particularité, la machine de personnalisation comprend un système de transfert des éléments d'adaptation du magasin de sortie vers le magasin d'entrée.

D'autres particularités et avantages de la présente invention apparaîtront plus clairement à la lecture de la description ci-après, faite en référence aux dessins annexés, dans lesquels :
- la figure 1a représente une vue en coupe longitudinale de l'élément d'adaptation selon un premier mode de réalisation de l'invention, un support électronique programmable étant en place dans l'élément d'adaptation,
- la figure 1b représente une vue en perspective de l'élément d'adaptation selon le mode de réalisation de la figure 1a,
- la figure 2 représente une vue en coupe longitudinale de l'élément d'adaptation selon un deuxième mode de réalisation de l'invention, un support électronique programmable étant en place dans l'élément d'adaptation,
- la figure 3 représente une machine de personnalisation suivant un mode de réalisation de la présente invention.

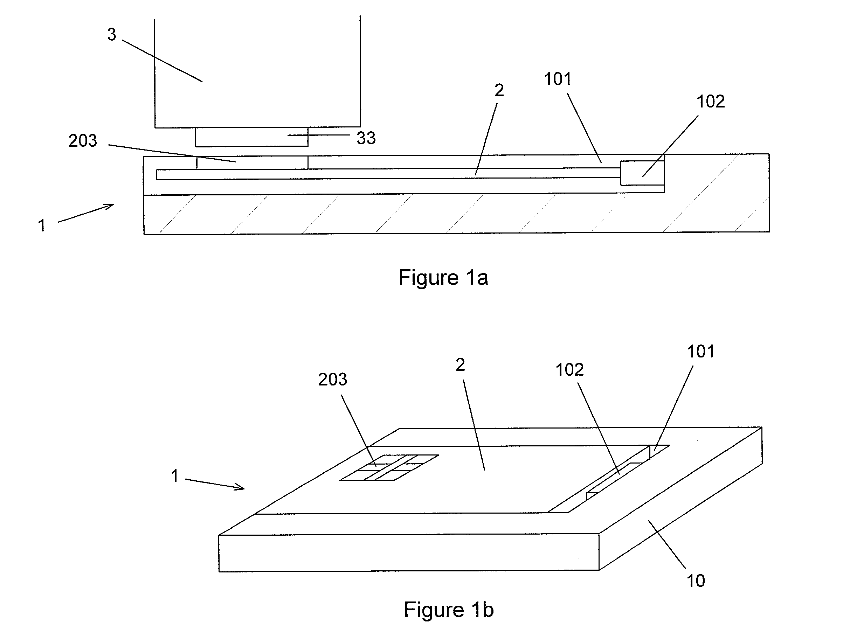

Dans un premier mode de réalisation, représenté sur les figures 1a et 1b, l'élément d'adaptation (1) selon l'invention est constitué d'un seul élément (1) muni d'un logement (101) de forme et de dimensions adaptées pour accueillir un type de support électronique programmable (2) comportant un moyen de communication à contact tel qu'une plage de contact. Au moins un moyen mécanique de maintien de support (102) permet de maintenir au moins un support électronique programmable (2) dans le logement (101). Le logement (101) est agencé de manière à ce que la plage de contact (203) du support électronique programmable (2), inséré dans ledit logement, soit disposée en vis-à-vis des broches de contact du dispositif de personnalisation (33) de la machine de personnalisation (3). Dans ce mode de réalisation, les informations de personnalisation arrivent du dispositif de personnalisation (33) de la machine de personnalisation (3) à la plage de contact (203) du support électronique programmable (2) par liaison électrique ou optique. Ainsi, la machine de personnalisation (3) dialogue directement avec le support électronique programmable.

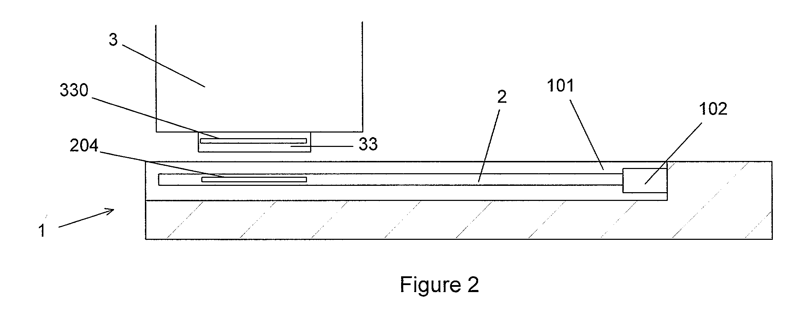

Dans un deuxième mode de réalisation, représenté sur la figure 2, l'élément d'adaptation (1) selon l'invention est constitué d'un seul élément (1) muni d'un logement (101) de forme et de dimensions adaptées pour accueillir un type de support électronique programmable (2) comportant un moyen de communication sans contact tel qu'une antenne de communication (204) reliée à une carte électronique de traitement du signal, permettant au support électronique programmable (2) de s'alimenter en énergie et de communiquer par liaison sans contact avec un dispositif de personnalisation (33) d'une machine de personnalisation (3). Au moins un moyen mécanique de maintien de support (102) permet de maintenir au moins un support électronique programmable (2) dans le logement (101). Le logement (101) est agencé de manière à ce que l'antenne (204) du support électronique programmable (2), inséré dans ledit logement, soit disposée à proximité, alignée ou non, d'une portion du dispositif de personnalisation (33) de la machine de personnalisation (3) comportant une antenne (330). Dans ce mode de réalisation, les informations de personnalisation arrivent de l'antenne (330) du dispositif de personnalisation (33) de la machine de personnalisation (3) à l'antenne (204) du support électronique programmable (2) par liaison sans contact. Ainsi, la machine de personnalisation (3) dialogue directement avec le support électronique programmable par transmission sans contact.

Dans ces modes de réalisation, les dimensions de l'élément d'adaptation (1) sont supérieures, au moins dans les dimensions largeur et profondeur, à celles de tous les supports électroniques programmables (2) à personnaliser et correspondent aux dimensions acceptées par les machines de personnalisation (3). De plus, le connecteur de support (102) est adapté au type de support électronique programmable (2) qui doit être personnalisé. De cette façon, une unique machine de personnalisation (3) permet de personnaliser tout type de supports électroniques programmables par simple changement de l'élément d'adaptation (1) qui a des dimensions standards adaptées à la machine de personnalisation (3), en choisissant l'élément d'adaptation (1) en fonction de la forme et du type de support électronique programmable à personnaliser.

Ainsi, les supports électroniques programmables à personnaliser peuvent être différents dans leurs dimensions, utiliser un protocole de communication avec contact, sans contact ou mixte, répondre au protocole des cartes à puce ISO 7816 ou ISO 14443 A et B ou à tout autre protocole de communication qui leur sont propres.

L'élément d'adaptation selon l'invention peut être utilisé sur différents types de machines de personnalisation (3). Il permet de fournir à chaque machine de personnalisation une interface mécanique standard quel que soit le type de support électronique programmable (2) qui doit être personnalisé. Chaque machine de personnalisation peut ainsi accueillir tout type de supports électroniques programmables sans subir aucune modification de sa structure.

Chaque machine de personnalisation (3) comporte au moins :
- un système de dépilage (300) des éléments d'adaptation (1) d'un magasin d'entrée (30) et un système d'empilage (310) des éléments d'adaptation (1) dans un magasin de sortie (31),
- un système d'insertion (34) des supports électroniques programmables (2) dans les éléments d'adaptation (1) en début de la machine de personnalisation (3), et un système de désinsertion (39) des supports électroniques programmables (2) des éléments d'adaptation (1) en fin de la machine de personnalisation (3),
- un système d'entraînement (32) des éléments d'adaptation (1) pour les amener successivement à chaque poste de la machine de personnalisation (3), et
- un dispositif de personnalisation (33), comprenant un système de communication entre une base de données fournissant les informations de personnalisation et les supports électroniques programmables (2) par l'intermédiaire d'une liaison avec ou sans contact entre le dispositif de personnalisation (33) de la machine de personnalisation (3) et le moyen de communication (203-204) du support électronique programmable (2), pour permettre de réaliser la personnalisation des supports électroniques programmables (2) par programmation des informations de personnalisation dans la mémoire programmable des supports électroniques programmables.

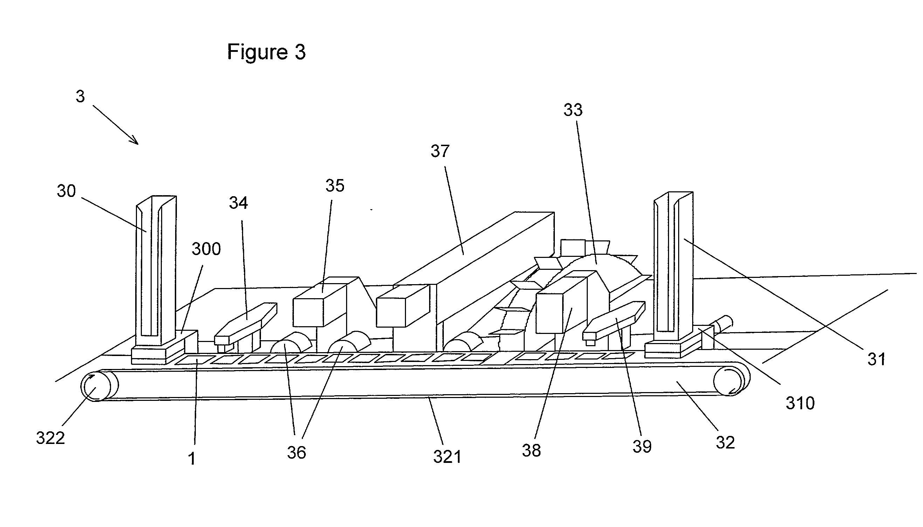

Dans un mode de réalisation, représenté sur la figure 3, les éléments d'adaptation (1) sont dépilés sur le système d'entraînement (32) depuis le magasin d'entrée (30) et circulent le long de la machine de personnalisation (3) jusqu'au magasin de sortie (31). Entre les deux magasins (30, 31), les éléments d'adaptation (1) passent successivement par :
- un poste (34) d'insertion des supports électroniques programmables (2) dans les éléments d'adaptation (1),
- le dispositif de personnalisation (33) des supports électroniques programmables (2), et
- un poste (39) de désinsertion des supports électroniques programmables (2) des éléments d'adaptation (1), les supports électroniques programmables pouvant, ou non, être ensuite empilés dans un magasin de stockage pour attendre un autre traitement.

D'autres postes de traitement peuvent être compris entre les postes d'insertion et de désinsertion des supports électroniques programmables sur les éléments d'adaptation. Ces autres postes peuvent être par exemple:
- un poste (35) d'inspection, par exemple du positionnement des supports électroniques programmables (2) dans les éléments d'adaptation (1), ou de l'état extérieur des supports électroniques programmables (2) tel qu'une impression située sur lesdits supports,
- un poste de marquage ou de gravure (37) des supports électroniques programmables,
- un poste d'identification (38) des supports électroniques programmables (2), par exemple une caméra ou un lecteur de code à barres si les supports électroniques programmables sont munis d'un code à barres, permettant de contrôler par exemple le marquage des supports réalisé par le poste de marquage (37) précédemment cité.

Après traitement et désinsertion des supports électroniques programmables (2), les éléments d'adaptation (1) sont ensuite empilés dans le magasin de sortie (31) de la machine de personnalisation (3).

Dans une variante de réalisation (non représentée), la machine de personnalisation comprend un système de transfert permettant de passer les éléments d'adaptation du magasin de sortie vers le magasin d'entrée de la machine de personnalisation, permettant ainsi de remplir le magasin d'entrée et vidant le magasin de sortie.

Dans une autre variante de réalisation, les magasins d'entrée et de sortie de la machine de personnalisation peuvent être confondus.

Il doit être évident, pour les personnes versées dans l'art, que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Elément d'adaptation (1), pour au moins un support électronique programmable (2) à personnaliser, de dimensions surfaciques supérieures à celles de tous les supports électroniques programmables à personnaliser et correspondant aux dimensions acceptées par la machine de personnalisation, l'élément d'adaptation (1) étant sans élément de communication à contact ou sans contact et amovible de la machine de personnalisation et étant **caractérisé en ce qu'**il est muni d'un logement (101) de forme et de dimensions adaptées pour accueillir et maintenir au moins un support électronique programmable (2), de façon à ce que des moyens de communication (203-204) à contact ou sans contact du support électronique programmable (2) se trouvent respectivement en vis-à-vis ou à proximité des moyens de communication respectivement, à contact ou sans contact, de la machine de personnalisation (3).

2. Utilisation d'une pluralité d'éléments d'adaptation (1) identiques selon la revendication 1, dans une machine de personnalisation (3) universelle de supports électroniques programmables (2),les éléments d'adaptation étant amovibles de la machine de personnalisation (3) qui comprend au moins :
- un système de dépilage (300) des éléments d'adaptation (1) depuis un magasin d'entrée (30) et un système d'empilage (310) des éléments d'adaptation (1) dans un magasin de sortie (31), le magasin d'entrée et le magasin de sortie étant distincts ou non,
- un système d'insertion (34) des supports électroniques programmables (2) dans les éléments d'adaptation (1) en début de la machine de personnalisation (3), et un système de désinsertion (39) des supports électroniques programmables (2) des éléments d'adaptation (1) en fin de la machine de personnalisation (3),
- un système d'entraînement (32) des éléments d'adaptation (1), équipés de supports électroniques programmables, pour les faire transiter dans la machine de personnalisation (3), et
- un dispositif de personnalisation (33), comprenant un système de communication entre une base de données fournissant les informations de personnalisation et les supports électroniques programmables (2) par l'intermédiaire d'une liaison à contact ou sans contact entre le dispositif de personnalisation (33) de la machine de personnalisation et le moyen de communication (203-204) du support électronique programmable (2), pour permettre de réaliser la personnalisation des supports électroniques programmables par programmation des informations de personnalisation.

3. Utilisation d'une pluralité d'éléments d'adaptation (1) dans un dispositif de personnalisation (3) selon la revendication 2, **caractérisée en ce que** la machine de personnalisation (3) comprend un système de transfert des éléments d'adaptation du magasin de sortie (31) vers le magasin d'entrée (30).
